# EUROPÄISCHE PATENTANMELDUNG

(11) **EP 0 848 204 A2**
(43) Veröffentlichungstag der Anmeldung: **17.06.1998**
(21) Anmeldenummer: 97250333.8
(22) Anmeldetag: 11.11.1997
(51) Int. Cl.: F17C 13/02

(54) **Verfahren zur Überwachung und Steuerung von Ein- und Ausspeicherprozessen an einem unterirdischen Speicher**

(30) Priorität: 11.12.1996 DE 19653725
(71) Anmelder: Verbundnetz Gas Aktiengesellschaft, 04347 Leipzig (DE)
(72) Erfinder: Hartan, Jörg, Dr.-Ing., 06686 Grossgörschen (DE); Gatzke, Ingo, Dipl.-Ing., 04275 Leipzig (DE); Zipper, Helfried, Dipl.-Geologe, 04317 Leipzig (DE)
(74) Vertreter: Radwer, Dieter

(57) **Zusammenfassung**

Die Erfindung betrifft ein Verfahren und eine Vorrichtung zur Überwachung und Steuerung der Ein- und Ausspeicherprozesse an Speichern mit einem definierten geometrischen Volumen auf der Grundlage des gemessenen Bohrlochkopfdruckes und der daraus abgeleiteten Strömungsgeschwindigkeit bzw. des Volumenstromes eines Speichermediums ohne direkte Gasmengenmessung.

Mit den bisher bekannten Verfahren und Ausrüstungen, die nach dem Prinzip der Gasmengenmessung arbeiten und Mittel zur rechtzeitigen Erkennung der Gefahr von Rohrbrüchen infolge hoher Strömungsgeschwindigkeiten aufweisen, ist eine effektive, rechnergestützte Prozeßführung des Betriebsregimes eines Speicher, inbesondere einer Gaskaverne nicht möglich. Die Erfindung beseitigt diesen Mangel und schlägt eine Lösung vor, mit der die Strömungsgeschwindigkeit in der Sondenleitung, der momentane Strömungszustand des Speichermediums, der Volumenstrom und das Gesamtvolumen an Speichermedium im Speicher auf der Grundlage des anhand bekannter Größen errechneten Speicherinnendruckes, des Druckabfalls im Förderstrang und der Temperatur des Mediums in der Sondenleitung bestimmt und für die Prozeßsteuerung eingesetzt wird.

## Beschreibung

Die Erfindung betrifft ein Verfahren zur Überwachung und Steuerung von Ein- und Ausspeicherprozessen an einem unterirdischen Speicher mit bekanntem Volumen auf der Grundlage des am Bohrlochkopf eines Bohrloches gemessenen Druckes.

Es ist allgemein bekannt, daß sich aus der Kenntnis der Strömungsgeschwindigkeit und des daraus errechenbaren Volumenstromes in einem Förderrohrstrang wesentliche Kriterien für den jeweils herrschenden Betriebszustand in einem unterirdischen Speicher während des Speicherbetriebes festlegen lassen.

Die bisher bekannten Lösungen zur Erfassung der Strömungsgeschwindigkeit bzw. Volumenstromes basieren grundsätzlich auf bekannten Verfahren zur Gasmengenmessung mittels Blenden, Düsen, Staurohren etc.. Der an den Meßaufnehmern entstehende Druck oder Differenzdruck wird mit Transmittern erfaßt, daraus die Strömungsgeschwindigkeit bzw. der Volumenstrom errechnet und zur Überwachung und Steuerung des Speicherbetriebes einschließlich der Erkennung von Rohrbrüchen in einer Steuerung verarbeitet. In Abhängigkeit vom Wert der Strömungsgeschwindigkeit erfolgt vermittels der Steuerung der Eingriff in den Prozeßablauf, beispielsweise Schließen des Sondenabsperrventils bei Erreichen kritischer Strömungsgeschwindigkeiten.

Die wesentlichen Nachteile dieser Meßwerterfassung bestehen darin, daß der gerätetechnische Aufwand relativ hoch und kostenaufwendig ist und zur Abdeckung eines weiten Meßbereiches, beispielsweise zwischen Normalbetrieb und dem Störfall (Rohrbruch), mehrere Differenzdruckmeßumformer notwendig sind. Da die Meßwertgeber unmittelbar im Gasstrom angeordnet sind, können diese bei der Hydratbildung leicht beschädigt werden. Außerdem können durch Flüssigkeitseintrag in den Impulsleitungen die Meßwerte stark verfälscht werden. Auch der Ausfall der Messung ist möglich.

Aus DD 0 153 737 ist eine Einrichtung zur Messung der Durchflußmengen in Rohrleitungen von Chemieanlagen bekannt, die die Bestimmung der Durchflußmenge über die Geschwindigkeitsmessung der in den Rohrleitungen fließenden Medien auf der Grundlage eines Gesamtdruckes und eines statischen Druckes vornimmt. Die der Berechnung der Durchflußmenge zugrunde liegenden Druckwerte werden mit Hilfe von Druck- und Differenzdruckmeßgeräten erfaßt, die in Kammern eines Abzweiges der Rohrleitung angeordnet sind.

Um die Massengeschwindigkeit der Luftströmung in einem Verbrennungsmotor zu bestimmen, nimmt die Meßeinrichtung nach DE 32 41 783 A1 ebenfalls eine Ermittlung des Differenzdruckes aus dem Druckwert im Lufteinlaß vor und hinter einer Drossel vor.

Beide Lösungen sind mit den vorstehend ausgeführten Nachteilen behaftet und daher für Ein- und Ausspeicherprozesse an unterirdischen Speichern nicht anwendbar.

Für bidirektionale Messungen, d.h. für Messungen mit denen sowohl die Ein- als auch die Ausspeicherprozesse erfaßt werden können, sind entweder zwei Meßeinrichtungen oder gesonderte Meßgeräte wie beispielsweise Meßblenden mit beidseitig scharfer Kante, Ultraschalldurchflußmeßgeräte oder symmetrische Staudrucksonden notwendig. Beide Lösungen sind mit einem hohen anlagenseitigen Aufwand verbunden und verursachen dadurch zwangsläufig hohe Kosten.

Eine bekannte druckabhängige Steuerung dient ausschließlich der Rohrbrucherkennung. Für die Betriebsführung der Ein- und Ausspeicherprozesse sind sie nicht geeignet. Der druckabhängigen Steuerung liegt die Erkenntnis zugrunde, daß der am Sondenkopf anstehende Druck unter anderem von der Strömungsgeschwindigkeit des Mediums bestimmt wird. Im Falle eines Rohrbruches wird die Strömungsgeschwindigkeit des Mediums stark ansteigen, so daß der Druck am Sondenkopf einen festgelegten Minimaldruck unterschreitet, der im normalen Betriebsfall nicht unterschritten werden darf. Der Druck im Speicher und damit auch der Druck am Sondenkopf ist von der eingelagerten Gasmenge abhängig. Der Druck in einem voll befüllten und in einem maximal zulässig ausgespeicherten Kavernenspeicher unterscheidet sich wesentlich. Daher besteht als Nachteil dieses Verfahrens die Notwendigkeit, den Grenzwert für das Ansprechen der Sensoren (Druckschalter) ständig an den Füllungsgrad des Speichers anzupassen. Weiterhin ist diese Steuerung nicht in der Lage, Rohrbrüche mit einem, in Verhältnis zum Leitungswiderstand der Förderleitung und des Sondenkopfes hohen Strömungswiderstand an der Bruchstelle zu erkennen.

Die bekannten druckänderungsabhängigen Steuerungen zur Erkennung von Rohrbrüchen nutzen den Effekt aus, daß im Falle eines Rohrbruches der Gradient des Druckes schlagartig ansteigt. Die Vorteile dieses Verfahrens liegen in der selbsttätigen Anpassung der Steuerung an verschiedene Betriebsdrücke in Abhängigkeit vom Füllungsgrad der Kaverne und in der Erkennung von Rohrbrüchen mit relativ hohem Leitungswiderstand an der Bruchstelle. Als Nachteil ist die verminderte Emfpindlichkeit dieser Steuerung bei kompressiblen Medien anzusehen. Die Betriebsführung der Ein- und Ausspeicherprozesse ist mit Hilfe der druckänderungsabhängigen Steuerungen nicht möglich.

Die vorgenannten Lösungen lassen sich nur mit relativ hohem Aufwand in ein bestehendes Steuersystem einbinden. Sie sind vorwiegend auf die spezifischen Belange einer Rohrbruchsicherung, die eine Erkennung von Strömungsgeschwindigkeiten in einer Größenordnung, die im Bereich des Vielfachen des Maximalwertes der Strömungsgeschwindigkeit des normalen Betriebs liegt, ausgelegt. Für die im normalen Betrieb ablaufenden Prozesse haben diese Meßgrößen keine Relevanz und können für eine Weiterverarbeitung nicht verwendet werden. So ist beispielsweise das Erkennen größerer Lecks oder Risse nicht möglich.

Der Erfindung liegt daher die Aufgabe zugrunde, ein Verfahren der eingangs genannten Art dahingehend weiterzubilden, daß bei Reduzierung der meßtechnischen Ausrüstungen die Strömungsgeschwindigkeit ohne direkte Gasmengenmessung bestimmt wird und bidirektionale Messungen sowohl zur Überwachung und Steuerung der Einspeiseprozesse als auch der Ausspeiseprozesse mit Hilfe einer Steuereinheit möglich sind.

Erfindungsgemäß wird die Aufgabe durch die im Anspruch 1 angegebenen Merkmale gelöst. Eine vorteilhafte Weiterbildung der Erfindung ergibt sich aus dem Unteranspruch 2.

Bei der Lösung der Aufgabenstellung geht die Erfindung von der Erkenntnis aus, daß ein Speicher, insbesondere ein Kavernenspeicher aufgrund seiner hohen Kapazität und der geringen Strömungswiderstände ein annähernd integrales Verhalten besitzt und aus dem Druckabfall an einer geraden Rohrleitung, wenn der Druck am Einlauf und am Auslauf des Rohrstückes bekannt ist, die Strömungsgeschwindigkeit bestimmt werden kann. Kavernenspeicher besitzen im allgemeinen keine Einrichtungen zur Messung des Innendruckes. Um das Problem einer fehlenden Druckmeßeinrichtung für den Kaverneninnendruck zu umgehen, wird der Druck in der Kaverne errechnet. Aus dem geometrischen Volumen und der Gestalt der Kaverne, den Stoffeigenschaften des Speichermediums, der eingespeicherten Menge an Speichermedium und der Temperatur des Mediums im Förderrohrstrang oder einer Sondenleitung abzüglich des geostatischen Druckes aufgrund des Höhenunterschiedes zwischen Speicher und Bohrlochkopf wird dieser Druck rechnerisch bestimmt.

Das Volumen des Speichers und die Stoffwerte des Speichermediums sind an sich bekannte Größen. Ist die Geschwindigkeit im Förderstrang v = O, so stellt sich am Bohrlochkopf der Speicherinnendruck abzüglich des Druckanteils durch den geodätischen Höhenunterschied zwischen Speicher und Bohrlochkopf (Länge des Förderstranges) ein. Aus diesen Werten kann die Gesamtmenge des eingespeicherten Mediums genau bestimmt werden.

Ist die Strömungsgeschwindigkeit v <> 0, so verändert sich der Druck am Bohrlochkopf um den Druckabfall (Druckverlust) im Förderstrang, der durch die reibungsbehaftete Strömung verursacht wird. Da die Zeitkonstante des Speichers sehr groß ist, ändert sich der Druck im Speicher nur sehr langsam. Der bei einer Strömungsgeschwindigkeit v = 0 gemessene Druck kann so zur Berechnung des Druckabfalls verwendet werden. Aus dem Druckabfall selbst wird die Strömungsgeschwindigkeit des Speichermediums am Bohrlochkopf berechnet und unter Berücksichtigung der Dichte des Mediums und des Querschnittes des Förderstranges der Volumenstrom ermittelt. Integriert man den Volumenstrom über die Zeit, erhält man die ein- bzw. ausgespeicherte Menge an Speichermedium und kann eine Bilanzierung der Gesamtmenge an gespeichertem Medium vornehmen.

Über die noch im Speicher befindliche Gesamtmenge läßt sich wieder der korrigierte Druck im Speicher berechnen. Im Hinblick dessen, daß sich bei laufender Aus- bzw. Einspeisung der Druck im Speicher kontinuierlich ändert, ist eine Korrektur dieses Wertes in zyklischen Abständen notwendig. Wird der Ein- oder Ausspeiseprozeß betriebsbedingt unterbrochen, liegt nach kurzer Beruhigungszeit wieder der Innendruck des Speichers am Bohrlochkopf abzüglich des geostatischen Anteils an. Eine Bewertung der Abweichung zwischen tatsächlichem Druck und dem berechneten Wert ermöglicht die Erkennung von Störungen in der Meßwerterfassung. Ebenfalls können unzulässig hohe Abweichungen von den zugrunde liegenden Prozeßparametern vom realen Ist-Zustand erkannt werden.

Nach dem erfindungsgemäßen Verfahren werden die Eingangssignale aus dem Druck am Bohrlochkopf und aus der Temperatur des Mediums gebildet. Mit diesen Daten ist eine hinreichend exakte Aussage über den momentanen Betriebszustand während der Ein- und Ausspeicherprozesse gewährleistet. Aus den genannten Daten werden die Strömungsgeschwindigkeit und der Volumenstrom berechnet. Der gemessene Volumenstrom kann zur Mengenbilanz des Speichers eingesetzt werden, auf dessen Grundlage das wirtschaftlichste Betriebsregime für den Speicher bestimmbar ist.

Mit Hilfe der Erfindung kann die Strömungsgeschwindigkeit als bestimmende Ausgangsgröße für die Überwachung- und Steuerung der Betriebsprozesse in einem sehr großen Bereich bestimmt und festgelegt werden. Die Erfindung schafft somit die Möglichkeit, die Betriebsführung der Ein- und Ausspeicherprozesse an die max. zulässigen Grenzwerte auszurichten. Das erfindungsgemäße Verfahren kann ohne zusätzlichen apparativen Aufwand zur bidirektionalen Messung sowohl für Einspeicherprozesse als auch für Ausspeicherprozesse eingesetzt werden. Die ständige Überwachung der Strömungsgeschwindigkeit mit Hilfe der Erfindung gewährleistet eine sichere Erkennung von Rohrbrüchen.

Die Erfindung soll nachstehend am Beispiel eines untertägigen Speichers in Form einer Gaskaverne mit einem definierten geometrischen Volumen näher erläutert werden. In der dazugehörigen Zeichnung zeigen:
- Fig. 1: - eine schematische Darstellung der Gaskaverne
- Fig. 2: - das Blockschaltbild zur Bestimmung der Faktoren für die Anpassung der Steuerung des Prozeßablaufes an die technologischen und technischen Bedingungen vor Ort
- Fig. 3: - das Blockschaltbild für den Prozeßanlauf
- Fig. 4: - das Blockschaltbild für die zyklische Steuerung der Prozeßabläufe
- Fig. 5: - eine schematische Darstellung des anlagenseitigen Aufbaus für die Durchführung des Verfahrens

Das in einer Gaskaverne 1 mit den Parametern

| | |
|---|---|
| Teufe des Kavernenmittelpunktes: | 544,7 m |
| max. Kaverneninnendruck pₛₚ: | 100 bar |
| min. Kaverneninnendruck pₛₚ: | 15 bar |
| geometrisches Volumen der Kaverne V_{geo}: | 194117 m³ |
| mittlere Temperatur in der Kaverne: | 20°C/293,15 K |
| Durchmesser des Förderstranges 2: | 200 mm (DN200) |

eingelagerte Medium, beispielsweise Erdgas mit einer Normdichte von 0,79 kg/m³, soll nach dem erfindungsgemäßen Verfahren ausgespeichert werden.

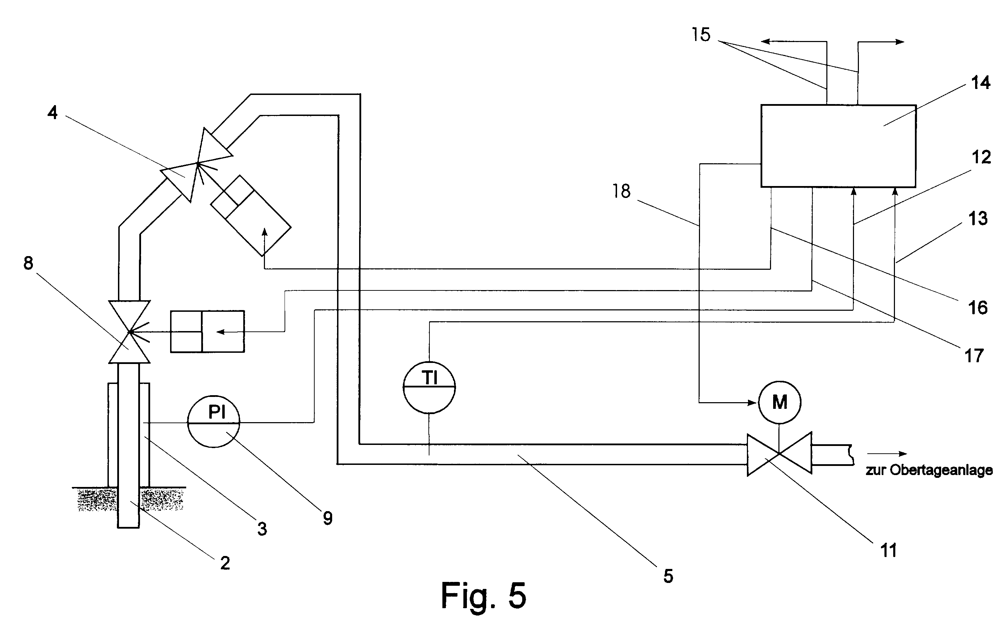

Die Kaverne 1 ist gemäß Fig. 5 mit einem am Kavernenkopf 3 angeordneten Druckmeßgerät 9 versehen und besitzt in an sich bekannter Weise eine Sicherheitsabsperrarmatur 4 und eine Hauptarmatur 8. Ferner ist in der Sondenleitung 5, die mit einem Absperrventil 11 verschließbar ist, ein Temperaturmeßgerät 10 angeordnet.

Die Signalleitung 12 des Druckmeßgerätes 9 am Kavernenkopf 3 und die Signalleitung 13 des Temperaturmeßgerätes 10 in der Sondenleitung 5 sind an die Eingänge einer Steuer- und Auswerteeinheit 14 aufgeschaltet. An Hand der erfaßten Meßwerte Druck und Temperatur werden in der Steuer- und Auswerteeinheit 14 die Strömungsgeschwindigkeit v, der Volumenstrom q_{Vn} des Speichermediums bezogen auf den Normzustand (Normvolumenstrom), der Kaverneninnendruck pₛₚ und die Gesamtmenge an Speichermedium V_{N} in der Kaverne 1 ermittelt.

Für die Prozeßführung und -steuerung sind die Signal-Ausgänge der Steuer- und Auswerteeinheit 14 über Leitungen 16;17;18; mit der Sicherheitsabsperrarmatur 4 und der Hauptabsperrarmatur 8 am Kavernenkopf 3 und mit dem Absperrventil 11 in der Sondenleitung 5 verbunden sowie Meß-und Steuerleitungen 15 (Netzwerklinien) zu einem Leitstand an die Steuer- und Auswerteeinheit 14 angeschlossen.

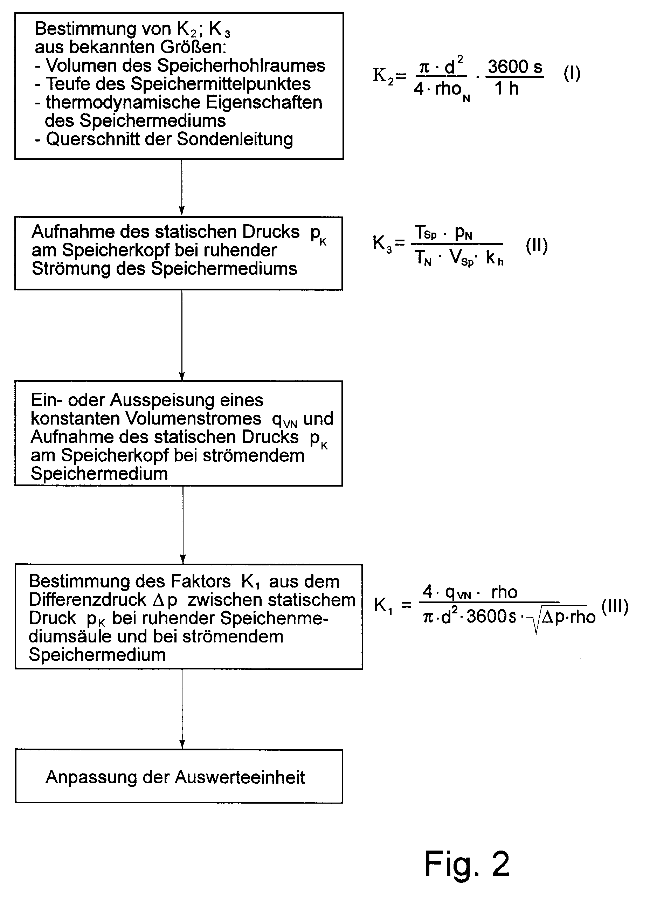

Vor Beginn des Ausspeicherprozesses werden, wie im Blockschaltbild nach Fig. 2 dargestellt, die Faktoren K₃ und K₂ für die Anpassung der Steuerung des Prozeßablaufes an die technologischen Bedingungen der Kaverne und der Kavernenausrüstung vor Ort aus dem Volumen des Kavernenhohlraumes, der Teufe des Kaverenenmittelpunktes, den thermodynamischen Eigenschaften des eingespeicherten Mediums und aus dem Querschnitt der Sondenleitung 5 nach den angegebenen Formeln I und II ermittelt. In den Formeln I und II bedeuten
- d: = Durchmesser der Rohrleitung
- rho: = Dichte des Speichermediums
- T_{Sp}: = Temperatur des Speichermediums im Speicher
- T_{N}: = Temperatur des Speichermediums im Normzustand
- p_{N}: = Druck im Normzustand
- V_{Sp}: = Volumen des Mediums im Speicher
- kₕ: = Korrekturfaktor für die Berücksichtigung des Druckzuwachses durch die Teufe des Kavernenmittelpunktes

Aus der Differenz zwischen dem Druck p_{K} bei ruhendem Gasstrom am Kavernenkopf 3 und dem Druck eines konstanten Volumenstromes q_{VN}, der dem maximal möglichen Druck p_{Sp} im Betriebsregime der Kaverne 1 entspricht, wird der Faktor K₁ nach der in Fig. 2 angegebenen Formel III ermittelt. In dieser Formel bedeuten:
- q_{VN}: = Volumenstrom des Speichermediums
- rho: = Dichte des Speichermediums
- d: = Durchmesser der Rohrleitung
- Δp: = Differenzdruck

Die so erhaltenen Faktoren K₁, K₂ und K₃, die einen unmittelbaren Einfluß auf den Prozeßablauf haben, werden als Rechengröße erfaßt und zur Programmierung des Ablaufes des Ausspeicherprozesses in die Steuer- und Auswerteeinheit 14 eingegeben.

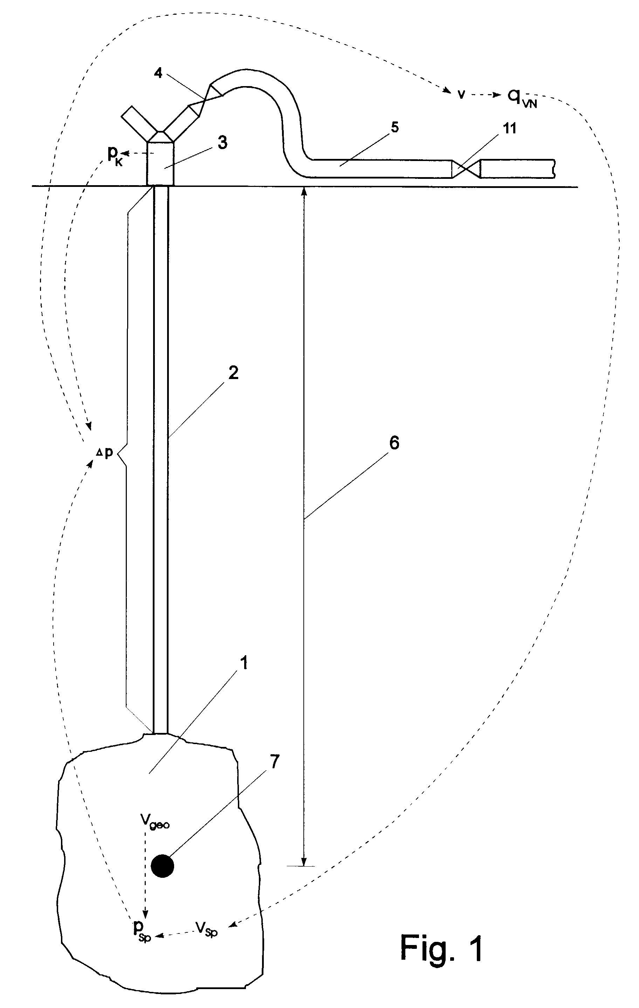

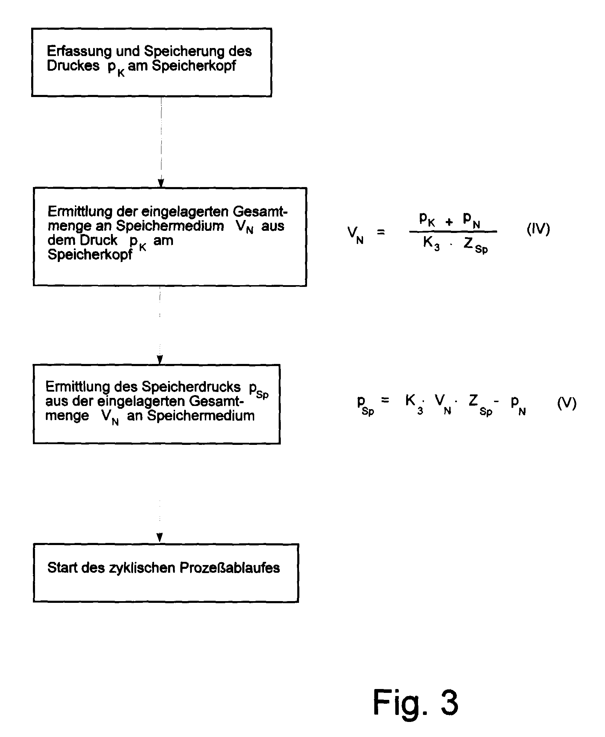

Nach Eingabe der Faktoren K₁, K₂ und K₃ wird die Steuer- und Auswerteeinheit 14 gestartet und in einem ersten Durchlauf durch die Auswerteeinheit 14, wie aus Fig. 3 hervorgeht, der Druck p_{K} am Kavernenkopf 3 erfaßt und die in der Kaverne 1 eingelagerte Gesamtmenge V_{N} an Speichermedium nach der Formel IV, in der
- p_{K}: = Druck am Kavernenkopf
- p_{N}: = Druck im Normzustand
- Z_{Sp}: = Realgasfaktor des Speichermediums unter Betriebsbedingungen im Speicher
- K₃: = Rechenfaktor nach Formel II
bedeuten, bestimmt. Aus der ermittelten Gesamtmenge V_{N} an Speichermedium wird der Kaverneninnendruck pₛₚ nach der Formel V ermittelt, in der
- K₃: = Rechenfaktor nach Formel II
- V_{N}: = Gesamtvolumen an Speichermedium im Speicher
- Z_{Sp}: = Realgasfaktor
- p_{N}: = Druck im Normzustand
sind. Im Anschluß hieran erfolgt der Start des Prozeßablaufes für die Ausspeicherung des eingelagerten Gases, der in zyklischen Abschnitten, wie in Fig. 1 anhand der gestrichelten Linien dargestellt, abläuft.

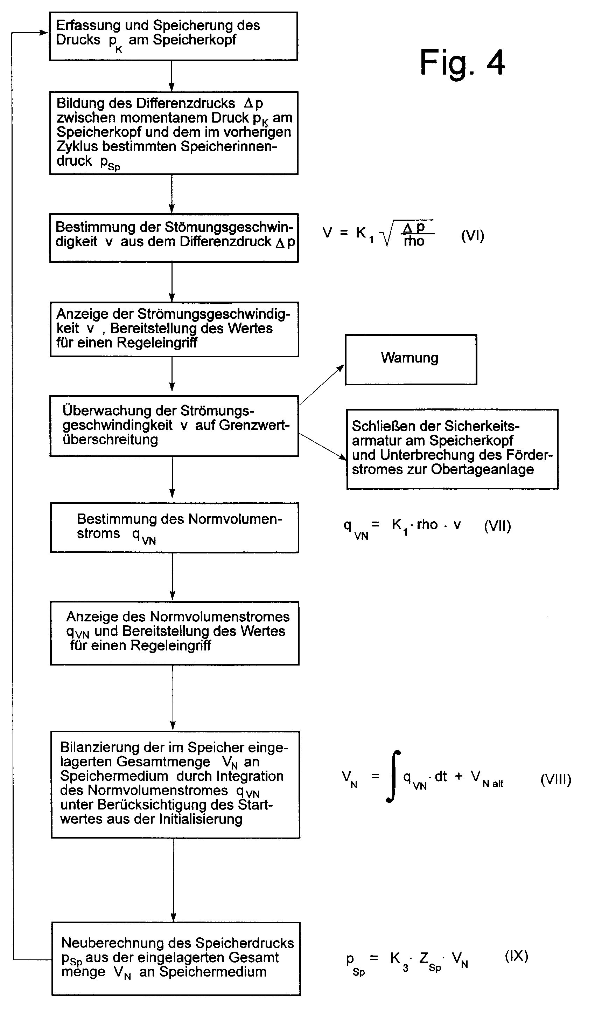

Der zyklische Prozeßablauf, wie im Blochschaltbild Fig. 4 dargestellt, beginnt mit der Erfassung und Speicherung des Druckes p_{K} am Kavernenkopf 3. Aus dem vorhergegangenen Durchlauf gemäß Fig. 3 wird der Differenzdruck Δp aus dem Druck p_{K} am Kavernenkopf 3 und dem nach Formel V bestimmten Kaverneninnendruck pₛₚ ermittelt und hieraus die Strömungsgeschwindigkeit v mit Hilfe der Formel VI, in der
- K₁: = Faktor gemäß Formel II
- Δp: = Differenzdruck
- rho: = Dichte des Speichermediums
sind, bestimmt. Die Strömungsgeschwindigkeit v wird für einen Regeleingriff bereitgestellt, bei Bedarf angezeigt und gleichzeitig auf eine mögliche Überschreitung der in der Steuer- und Auswerteeinheit 14 eingestellten Grenzwerte überwacht. Bei einer Überschreitung dieser Grenzwerte wird ein Warnsignal ausgelöst und gegebenenfalls die Sicherheitsarmaturen 4, 8 und das Absperrventil 11 geschlossen.

In der Steuer- und Auswerteeinheit 14 wird auf der Grundlage der Strömungsgeschwindigkeit v mit Hilfe der Formel VII der Normvolumenstrom q_{VN} ermittelt, angezeigt und ebenfalls für einen Regeleingriff bereitgestellt. In der Formel VII bedeuten,
- K₂: = Faktor nach Formel (I)
- rho: = Dichte des Speichermediums
- v: = Stömungsgeschwindigkeit des Speichermediums

Mit der Formel VIII - Fig. 4 -, in der
- q_{VN}: = Normvolumenstrom des Speichermediums
- V_{Nalt}: = Normvolumen am Beginn des Ausspeicherprozesses
bedeuten, wird durch Integration des Normvolumenstromes q_{VN} unter Berücksichtigung des Normvolumens V_{Nalt} die eingelagerte Gesamtgasmenge V_{N} in der Kaverne 1 bilanziert und einer Neuberechnung des Speicherinnendruckes pₛₚ nach der Formel IX, in der
- K₃: = Faktor nach Formel (II)
- Z_{Sp}: = Realgasfaktor des Speichermediums
- V_{N}: = Normvolumen
sind, für den selbständigen Start eines neuen Verfahrenszykluses für den Prozeßdurchlauf zugrunde gelegt.

Diese in den Blockschaltbildern nach Fig. 2 bis 4 dargestellten Steuerungszyklen laufen selbsttätig während des gesamten Speicherbetriebes bei einer Ein- bzw. Ausspeicherung eines ein- bzw. auszulagernden Mediums ab, wobei über die an der Steuer- und Auswerteeinheit 14 angeschlossenen Meß- und Signalleitungen 15 der gesamte Prozeßablauf von einem Leitstand aus kontrolliert und überwacht werden kann. Die sich wiederholenden zyklischen Prozesse sind, wie bereits erwähnt, durch die gestrichelten Linien in Fig. 1 kenntlich gemacht.

### Bezugszeichenaufstellung

- 1: Gaskaverne
- 2: Förderstrang
- 3: Kavernenkopf
- 4: Sicherheitsabsperrarmatur
- 5: Sondenleitung
- 6: geodätischer Höhenunterschied (Teufe des Kavernenmittelpunktes)
- 7: Kavernenmittelpunkt
- 8: Hauptarmatur (Mastervalve)
- 9: Druckmeßgerät
- 10: Temperaturmeßgerät
- 11: Absperrventil
- 12: Signalleitung
- 13: Signalleitung
- 14: Steuer- und Auswerteeinheit
- 15: Meß- und Steuerleitung
- 16: Signalleitung
- 17: Signalleitung
- 18: Signalleitung
- p_{K}: Druck am Bohrlochkopf
- pₛₚ: Speicherinnendruck
- Δp: Differenzdruck
- v: Strömungsgeschwindigkeit
- q_{VN}: Volumenstrom
- V_{geo}: geometrisches Volumen des Speichers
- V_{Sp}: Gesamtmenge an Speichermedium

## Patentansprüche

1. Verfahren zur Überwachung und Steuerung von Ein- und Ausspeicherprozessen an einem unterirdischen Speichern mit bekanntem Volumen auf der Grundlage des am Bohrlochkopf eines Bohrloches gemessenen Druckes, **dadurch gekennzeichnet,**
a) daß bei einer Strömungsgeschwindigkeit gleich Null im Förderstrang der Speicherinnendruck errechnet wird durch Addition des am Bohrlochkopf gemessenen Druckes und des geostatischen Druckes aufgrund des Höhenunterschiedes zwischen Speicher und Bohrlochkopf, daß auf Grundlage des so errechneten Speicherinnendruckes, des bekannten Volumens des Speichers, der Stoffwerte und der Temperatur im Förderstrang die Gesamtmenge eingespeicherten Mediums bestimmt wird,
b) daß aus der Abweichung zwischen dem errechneten Speicherinnendruck pₛₚ und dem am Bohrlochkopf anstehenden Druck p_{K} der Differenzdruck Δp in einer Auswerteeinheit gebildet wird, aus dem so gebildeten Differenzdruck und der Temperatur im Förderstrang die Strömungsgeschwindigkeit v und der Volumenstrom V des Speichermediums ermittelt und die Strömungsgeschwindigkeit v mit gespeicherten Grenzwerten verglichen wird und bei Überschreiten der vorgegebenen Grenzwerte ein Eingriff in den Prozeßablauf erfolgt,
c) und daß der Volumentstrom über die Zeit integriert, dadurch die ein- oder ausgespeicherte Mediummenge erhalten und dann eine Bilanzierung der Gesamtmediummenge im Speicher vorgenommen wird, daß in zyklischen Abständen auf Grundlage der aktuellen Gesamtmediummenge, des Speichervolumens, der Temperatur und der Stoffwerte ein neuer Speicherinnendruck errechnet wird und dann das Verfahren mit Schritt b) forgesetzt wird.

2. Verfahren nach Anspruch 1, **dadurch gekennzeichnet,** daß bei Erreichen der Grenzwerte für die Strömungsgeschwindigkeit v im Förderstrang in einer ersten Stufe eine Warnmeldung erfolgt und in einer weiteren zweiten Stufe Sicherheitsabsperrarmaturen des Speichers und eine Absperrarmatur in der Sondenleitung geschlossen und die Steuerung gegen fernbetätigtes Wiederauffahren der Sperr- und Sicherheitsarmaturen verriegelt wird.
